# FASCICULE DE BREVET EUROPEEN

(11) **EP 0 489 613 B1**
(45) Date de publication et mention de la délivrance du brevet: **21.09.1994**
(21) Numéro de dépôt: 91403121.6
(22) Date de dépôt: 20.11.1991
(51) Int. Cl.: G01C 19/02

(54) **Gyroscope à entraînement par ressort, comportant un dispositif de débrayage**
Federangetriebener Kreisel mit Abkuppelungsmechanismus
Spring-driven gyroscope containing disengagement means

(30) Priorité: 06.12.1990 FR 9015309
(43) Date de publication de la demande: 10.06.1992
(73) Titulaire: AEROSPATIALE Société Nationale Industrielle, 75781 Paris Cédex 16 (FR)
(72) Inventeur: Moutardier, Jacques, F-92350 Le Plessis Robinson (FR)
(74) Mandataire: Bonnetat, Christian

(56) Documents cités:
- US-A- 3 232 121
- US-A- 3 261 214
- US-A- 3 263 508

## Description

La présente invention concerne un gyroscope dont la rotation du rotor est provoquée par un dispositif de lancement utilisant la détente d'un ressort.

Par exemple par les documents US-A-3 263 508 et US-A-3 261 214, on connaît déjà un gyroscope comprenant :
- un boîtier ;
- un rotor disposé dans ledit boîtier ;
- un ressort à lame spiralée susceptible de passer de l'état bandé à l'état débandé pour lancer en rotation ledit rotor et dont l'une des extrémités est liée audit boîtier ;
- des moyens de blocage de la rotation dudit rotor ;
- des moyens de commande des moyens de blocage de la rotation dudit rotor ;
- un arbre rotatif disposé coaxialement audit ressort et susceptible d'être déplacé en translation, l'autre extrémité dudit ressort étant liée audit arbre ;
- des moyens d'accouplement dudit arbre avec ledit rotor susceptibles de solidariser en rotation ledit arbre et ledit rotor ;
- ledit arbre pouvant occuper axialement une position de repos pour laquelle lesdits moyens d'accouplement ne coopèrent pas et ledit ressort est débandé avec ses spires alignées ou une position de travail pour laquelle lesdits moyens d'accouplement coopèrent et ledit ressort est bandé et déformé axialement.

Dans ce gyroscope connu, l'arbre entraîné par le ressort à lame spiralée est associé à un écrou évitant, après désaccouplement lesdits moyens d'accouplement, de nouveaux couplages entre l'arbre et le rotor. Il en résulte une structure relativement complexe.

La présente invention a pour but de remédier à cet inconvénient et elle concerne un gyroscope de structure simplifiée.

A cet fin, selon l'invention, le gyroscope du type décrit ci-dessus est caractérisé en ce que ledit arbre est monté coulissant en translation par rapport à des paliers prévus pour assurer sa rotation et en ce qu'un moyen de blocage en translation limite, après désaccouplement des moyens d'accouplement du rotor et de l'arbre, la course de translation dudit arbre empêchant ainsi tout nouveau couplage.

Ainsi, après lancement du rotor, l'arbre passe dans une position éloignée du rotor et y reste, ce qui supprime tout risque de couplage ultérieur entre eux.

Bien que le raccordement entre l'arbre et le rotor puisse comporter un renvoi angulaire, lesdits rotor et arbre peuvent être coaxiaux, l'un comportant axialement l'un desdits moyens d'accouplement, et l'autre comportant axialement l'autre desdits moyens d'accouplement.

Par exemple, lesdits moyens d'accouplement sont du type vis-écrou ou du type à baïonnette.

Cela constitue ainsi des moyens d'accouplement très simples entre l'arbre et le rotor, sans dispositif de renvoi angulaire, et le désaccouplement peut s'effectuer par translation selon l'axe commun.

Avantageusement, ledit moyen de blocage en translation dudit arbre est une bague élastique.

Par ailleurs, le boîtier peut comporter une partie mobile reliée de façon fixe à une extrémité du ressort et permettant de bander ce dernier.

Cela permet ainsi de bander aisément ce ressort en l'absence de moyen externe.

De plus, le boîtier comporte un moyen d'accouplement en rotation dudit rotor avec un système externe d'entraînement en rotation. Ce moyen d'accouplement en rotation peut être constitué d'un trou fileté, ou d'une vis, disposé coaxialement avec l'axe du rotor.

Il peut aussi être constitué de la partie mâle ou femelle d'un système à baïonnette.

Il peut de même être formé d'une fente perpendiculaire à l'axe du rotor et passant par celui-ci, ou bien d'une clavette disposée comme ladite fente.

Ainsi, le ressort peut être bandé par un moyen externe, pouvant être mécanique.

Les figures du dessin annexé feront bien comprendre comment l'invention peut être réalisée. Sur ces figures, des références identiques désignent des éléments identiques ou semblables.

La figure 1 représente le gyroscope dans l'état pour lequel le ressort est bandé, l'arbre et le rotor étant accouplés.

La figure 2 illustre l'état du gyroscope pour lequel le ressort est débandé, l'arbre et le rotor étant alors désaccouplés.

La figure 3 montre un exemple de moyens d'accouplement entre le rotor et l'arbre.

La figure 4 montre un exemple d'autres moyens d'accouplement entre le rotor et l'arbre.

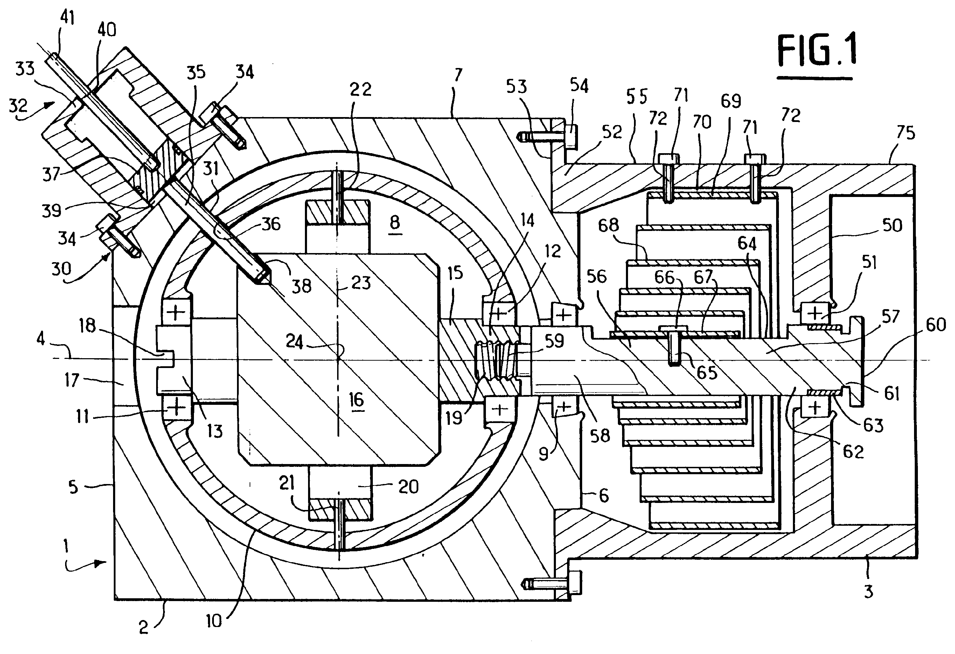

Le gyroscope selon l'invention est représenté, sur la figure 1, à l'état pour lequel le ressort est bandé, le gyroscope étant alors prêt à être lancé. Il comporte un boîtier 1 constitué de l'assemblage fixe d'un premier châssis 2 et d'un second châssis 3. L'ensemble présente globalement une symétrie de révolution par rapport à un axe 4 traversant ces deux châssis.

Le premier châssis 2 comporte deux parois d'extrémité, respectivement 5 et 6, perpendiculaires à l'axe 4, et une paroi latérale 7 joignant ces deux parois et définissant une cavité 8 de forme sensiblement sphérique. La paroi 6 comporte un premier palier 9 axé sur l'axe 4. A l'intérieur et à proximité de la face interne de ce premier châssis 2, se trouve un cadre primaire 10, comportant des deuxième et troisième paliers, respectivement 11 et 12, proches respectivement des parois 5 et 6, et axés sur l'axe 4, qui portent les extrémités respectives 13 et 14 d'un arbre 15 d'un rotor 16. Le palier 12 est ainsi en regard du palier 9. Ces paliers 11 et 12 assurent aussi le blocage en translation axiale de cet arbre. Une ouverture 17, située dans la paroi 5, en regard de l'extrémité 13 de l'arbre 15, permet d'accéder à une rainure 18 située en bout de cet arbre 15 sur cette extrémité 13, perpendiculaire à l'axe 4 et passant par celui-ci. L'extrémité 14 de l'arbre 15 comporte un trou axial fileté 19. Un cadre secondaire 20 est articulé sur le cadre primaire 10, en regard de la périphérie du rotor 16, grâce à deux axes colinéaires 21 et 22.

L'ensemble constitué de la cavité 8, du cadre primaire 10, du cadre secondaire 20, de l'arbre 15 et du rotor 16, présente une symétrie par rapport à un plan 23 perpendiculaire à l'axe 4 et équidistant des deux paliers 11 et 12. Le plan 23 coupe cet axe 4 en un point 24, centre de la sphère définie par le cadre primaire 10. Lesdits axes 21 et 22 sont situés dans le plan 23 et leur axe passe par le centre 24.

Le châssis 2 comporte un méplat 30 situé sur l'arête externe commune aux parois 5 et 7, et ayant un passage 31 en son centre, orienté vers le centre 24 de la sphère. Sur ce méplat sont montés des moyens de blocage 32 constitués d'un boîtier 33, fixé au châssis 2 par des vis de fixation 34, et dans lequel un doigt mobile 35, orienté vers le centre 24 de la sphère, peut coulisser en passant au travers du passage 31, ainsi qu'au travers d'un trou 36, percé dans le cadre primaire 10 selon un axe passant par le centre 24 et le passage 31. Ce doigt 35 est terminé, côté opposé au centre 24, par un piston 37 coulissant à l'intérieur du boîtier 33.

Le piston 37 comporte, à sa périphérie, une bague fendue élastique logée dans une gorge circulaire, tandis que la paroi cylindrique interne du boîtier 33 comporte, près de son extrémité opposée au méplat 30, une gorge circulaire pouvant recevoir la bague lorsque le piston 37 passe dans sa seconde position.

Ce doigt 35 peut occuper soit une première position, pour laquelle il traverse le trou 36 du cadre primaire 10 et vient pénétrer dans un trou 38 situé en périphérie du rotor 16, soit une seconde position, pour laquelle il est à l'extérieur du cadre primaire 10. Un moyen de commande 39, pyrotechnique (non représenté), permet de faire passer ce doigt 35 de sa première à sa seconde position, tandis qu'un moyen de commande 40, constitué d'une ouverture dans le boîtier 33, dans l'axe du doigt mobile 35, et d'une tige filetée 41 pouvant se visser dans le piston 37, permet le passage de l'une à l'autre position, par poussée ou traction.

Le second châssis 3, de forme générale cylindrique axée sur l'axe 4, a un rayon externe voisin du rayon de la cavité sphérique 8 du premier châssis 2. Une première paroi d'extrémité 50, opposée au premier châssis 2 et perpendiculaire à l'axe 4, porte un quatrième palier 51, tandis qu'une seconde paroi d'extrémité du cylindre est ouverte, et comporte un épaulement de révolution 52, reçu dans un évidement 53 de la paroi 6 du premier châssis 2, et pouvant être fixé par des vis de fixation 54 à ladite paroi 6. Ces deux parois d'extrémité 50 et 52 sont reliées par une paroi à surface cylindrique 55.

Un second arbre rotatif 56, axé sur l'axe 4, a ses extrémités 57 et 58 portées respectivement par les paliers 9 et 51. L'extrémité 57 comporte un bout d'arbre cylindrique formant vis 59, débordant du palier 9, ayant approximativement la taille du trou 19, et pouvant s'y visser, selon un premier sens de rotation, par exemple le sens horaire lorsqu'on observe le gyroscope à partir d'un point de l'axe 4 situé du côté de la paroi 50.

L'arbre 56 comporte, en partant de son extrémité 57, un épanouissement 60, suivi d'une gorge 61, de diamètre un peu inférieur au diamètre intérieur du palier 51, et s'étendant sur une longueur axiale de taille voisine de celle dudit palier 51; cette gorge est suivie d'une surface cylindrique 62 de diamètre égal au diamètre interne du palier 51, au jeu près, et de longueur axiale sensiblement égale à celle du palier 51. Un moyen de blocage en translation 63, réalisé sous la forme d'une bague fendue élastique spontanément expansible, de diamètre externe, en l'absence de contrainte, supérieur au diamètre interne du palier 51, est monté dans la gorge 61; cette bague a une épaisseur égale à la différence entre le rayon de la gorge et celui de la paroi interne du palier 51. L'arbre 56 peut ainsi, selon la position des éléments ci-dessus, avoir un déplacement axial.

Dans sa partie médiane, le second arbre 56 présente un plat 64 comportant au centre un trou radial fileté 65 recevant une vis de fixation 66 servant à fixer une première extrémité 67 d'un ressort à lame 68 dont une seconde extrémité 69 est fixée sur une face interne 70 de la paroi 55 du châssis 3, par deux vis de fixation 71 fixées dans des points d'attache 72 constitués de trous percés dans ladite paroi cylindrique, ledit ressort 68 étant enroulé autour de l'arbre 56, selon ledit premier sens de rotation en partant de cet arbre 56. Le plat 64 est destiné à compenser la hauteur de la tête de la vis de fixation 66, de façon qu'elle ne gêne pas les spires du ressort 68. A l'état débandé, le ressort 68 est contenu dans un volume cylindrique, axé sur l'axe 4, de diamètre sensiblement égal à celui de la cavité interne du châssis 3, et de largeur égale à la largeur de la lame du ressort 68, volume limité par les deux bords des spires qui sont respectivement dans un même plan de part et d'autre du ressort. Inversement, lorsque les arbres 15 et 56 sont accouplés, le ressort 68 est déformé axialement et les bords des spires sont alors décalés axialement entre eux. Dans cet état, la vis 59 est vissée dans le trou 19, et la gorge 61 se trouve engagée sous le palier 51, qui est aussi au contact de la surface 62 de l'arbre 56.

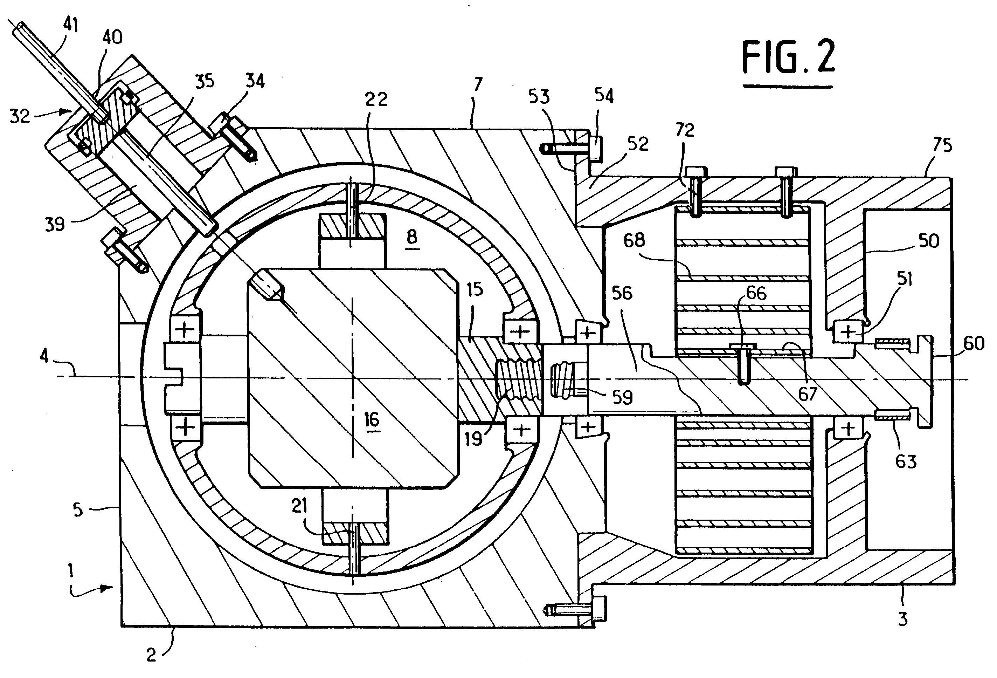

La figure 2 illustre l'état désactivé du dispositif de lancement du gyroscope, c'est-à-dire lorsque les arbres 15 et 56 sont désaccouplés.

Pour faciliter le bandage du ressort 68, le châssis 3 peut comporter, ou être constitué d'une partie rotative 75 axée sur l'axe 4, portant les points d'attache 72 pour le ressort. Cette partie rotative 75 tourne en prenant appui sur l'épaulement à symétrie de révolution constitué de l'évidement 53, un blocage en rotation étant assuré par les vis de fixation 54. Un dispositif à cliquets (non représenté) peut être implanté au niveau de l'évidement 53.

Le lancement en rotation du gyroscope est effectué de la manière suivante.

Tout d'abord, le doigt 35 est mis, ou maintenu, dans sa première position au moyen de la commande 40, ce qui bloque le rotor 16.

Ensuite, on va accoupler les deux arbres 15 et 56 par vissage de la vis 59 dans le trou 19. Cela nécessite de libérer préalablement la course en translation du second arbre 56, ce qui s'effectue en pinçant radialement la bague 63 de façon à la faire pénétrer à l'intérieur du palier 51 en poussant sur l'épanouissement 60. Le ressort 68 est ainsi contraint à se déformer axialement de façon élastique, les bords des spires se décalant axialement entre eux, comme représenté à la figure 1. Au moyen de l'épanouissement 60, on peut alors visser la vis 59 dans le trou 19. Le rotor 16 et le second arbre 56 sont ainsi solidaires du ressort 68.

Le ressort 68 est ensuite bandé en faisant tourner dans le premier sens de rotation la partie rotative 75, puis en la bloquant par les vis de fixation 54.

Une autre façon de bander le ressort 68 consiste, comme précédemment, à bloquer la rotation du rotor 16 et à accoupler les arbres 15 et 56 entre-eux.

La partie rotative 75 est bloquée par les vis de fixation 54 puis le rotor 16 est débloqué en rotation en tirant sur la tige 41 préalablement vissée dans le piston 37. Une manivelle terminée par une partie mâle pénétrant dans la rainure 18 permet alors de bander le ressort 68, en tournant dans le sens opposé au premier sens. Le rotor 16 est ensuite bloqué en rotation au moyen de la tige 41 qui fait passer les moyens de blocage 32 de la rotation du rotor 16 dans leur première position, ce qui est effectué en enfonçant le doigt 35 dans le trou 38 de ce rotor 16, au moyen de la tige 41.

Le rotor 16 et son arbre 15 peuvent alors être lancés en rotation, ce qui s'effectue en faisant passer le doigt 35 de sa première position, qui bloque le rotor 16, à sa seconde position, qui libère ce dernier, sous l'effet de la commande 39, réalisée sous la forme d'une surpression dans le boîtier 33, obtenue par l'explosion d'une faible charge pyrotechnique, qui, prenant appui sur le méplat 30, repousse le piston 37 et le doigt 35 associé vers l'extérieur du cadre primaire 10.

La bague fendue élastique entourant le piston 37 se détend alors dans la rainure de la paroi interne du boîtier 33 et empêche tout retour du piston 37 vers sa première position.

Le ressort 68 est alors libre de se débander et il entraîne les deux arbres 15 et 56 et le rotor 16 dans le premier sens de rotation, ce qui confirme le vissage desdits arbres.

Lorsque le ressort 68 a transféré la quasi-totalité de son énergie stockée, il se trouve débandé et tend à freiner le second arbre 56 dans sa rotation, alors que le premier arbre 15 continue de tourner à vitesse quasi-constante sous l'effet de l'inertie du rotor 16. De ce fait, la différence de vitesse angulaire entre ces deux arbres fait se dévisser la vis 59 du trou 19, libérant ainsi l'accouplement de ces deux arbres. Le second arbre 56, qui reste lié au ressort 68, a sa vitesse de rotation qui diminue et s'annule puis s'inverse, pour ensuite osciller autour de la position de repos en rotation du ressort 68, représentée à la figure 2.

Ce second arbre 56 a une position de repos en translation qui correspond à l'état pour lequel le ressort 68 n'est pas déformé axialement. Le désaccouplement de ce second arbre 56 vis-à-vis du premier arbre 15 autorise le ressort 68 à revenir, sous l'action des forces de rappel axiales engendrées par sa déformation élastique axiale, vers sa position de repos en translation. L'arbre 56, s'écartant de l'arbre 15, passe ainsi par sa position de repos en translation, ce qui fait sortir la bague fendue 63 de l'intérieur du palier 51. Ce second arbre 56 tend à dépasser, toujours dans la direction l'écartant du premier arbre 15, sa position de repos en translation d'une longueur sensiblement égale à sa déformation axiale au moment où il a terminé de se désaccoupler, c'est-à-dire la translation qui correspond à l'accouplement du premier filet de la vis 59 au trou 19. Cependant, l'éventuel mouvement naturel oscillatoire en translation de cet arbre 56 est bloqué par la bague 63 qui l'empêche de dépasser sa position de repos lors de son retour vers l'arbre 15. L'oscillation de l'arbre 56 est ainsi amortie rapidement par des percussions successives de la bague 63 sur le flanc du palier 51, et les deux arbres ne peuvent plus se coupler. Le ressort 68 constitue ainsi un moyen de commande automatique de la déconnexion des moyens d'accouplement 19 et 59.

Un tel dispositif permet ainsi d'assurer le lancement en rotation d'un gyroscope tout en garantissant un débrayage du dispositif de lancement à ressort, à l'instant voulu, et au moyen d'un mécanisme simple et robuste.

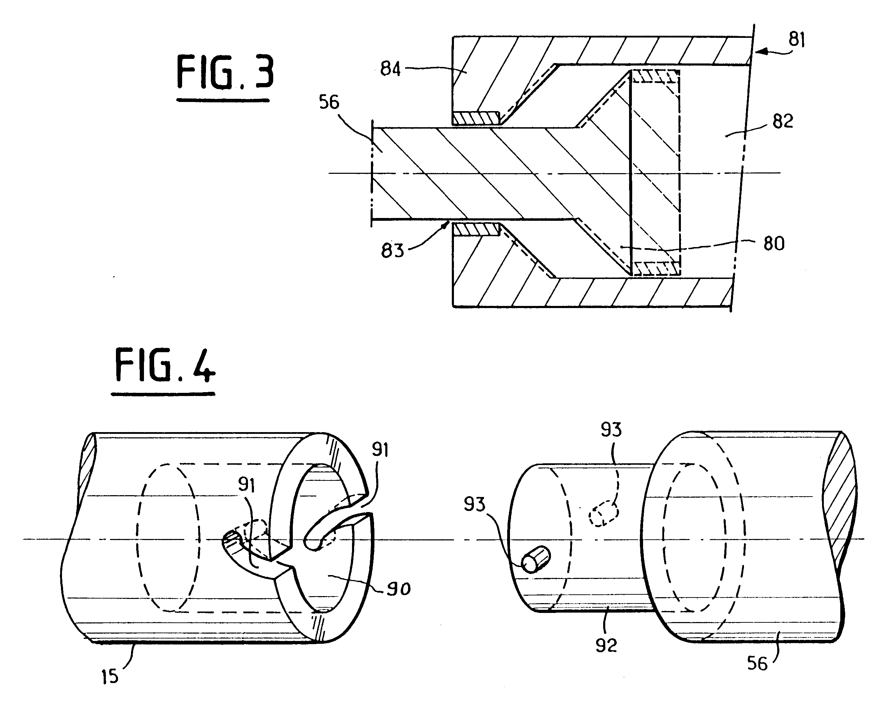

On remarquera que le second arbre 56 peut être utilisé pour lancer deux rotors contenus dans deux châssis 2 respectifs, et situés de part et d'autre du second arbre 56. La figure 3 montre un exemple de réalisation pour prolonger ce dernier du côté de son extrémité 58 et de le terminer par une extrémité conique 80, par exemple, portant des nervures radiales. Un troisième arbre 81, relatif à un second rotor, comporte, en extrémité, une chambre 82 recevant ladite extrémité conique 80, au travers d'une ouverture 83 d'une paroi d'extrémité 84, la découpe de ladite ouverture 83 reproduisant en creux la forme de l'extrémité conique 80. A l'état repos du ressort 68, les formes correspondantes de l'extrémité 80 et l'ouverture 83 sont espacées axialement de la distance axiale selon laquelle se translate la vis 59 lorsqu'elle vient se visser à fond dans le trou 19. Le montage initial peut se faire en passant l'arbre mâle, qui a une extrémité conique, au travers de l'autre. Cette forme conique peut évidemment voir son inclinaison être modifiée jusqu'à une forme en "T", à nervures dans un plan perpendiculaire à l'axe 4, ou inversement, jusqu'à une forme cylindrique, les nervures étant parallèles à l'axe 4 et ne s'étendant que sur la longueur voulue.

Un couplage par vissage du troisième arbre 82 est encore possible mais non nécessaire, puisque l'arbre 15 assure le blocage en translation du second arbre 56. On peut ainsi avoir une rainure du type 18, solidaire de l'un desdits arbres, pouvant recevoir une clavette, solidaire de l'autre arbre, qui fait office de tournevis.

L'arbre mâle 56 peut servir de porte-palier glissant pour l'autre arbre 81, soit au niveau du corps central de l'arbre mâle lui-même, soit au niveau du pourtour de la partie conique 80, prolongée alors et portant un tel palier, comme représenté en pointillé à la figure 3, portant la face intérieure de la chambre 82, cette deuxième solution permettant de disposer d'un diamètre plus grand pour réaliser le palier.

La figure 4 représente d'autres moyens d'accouplement entre l'arbre 15 et l'arbre 56, sous la forme d'un dispositif à baïonnette. L'arbre 15 comporte en extrémité un trou 90 dont la paroi cylindrique est percée de deux échancrures 91 diamétralement opposées et tournant dans le premier sens de rotation lorsque l'on pénètre dans ce trou 90. De son côté, l'arbre 56 comporte une partie mâle cylindrique 92 pourvue de deux ergots 93 diamétralement opposés, qui peuvent pénétrer dans lesdites échancrures 91 et venir respectivement prendre appui sur un épaulement au fond de ces échancrures 91 lorsqu'on visse cette partie mâle dans ledit trou 90. La surface des épaulements est prévue de taille suffisante pour supporter la force exercée par le ressort 68.

## Revendications

1. Gyroscope, du type comprenant :
- un boîtier (1) ;
- un rotor (16) disposé dans ledit boîtier (1) ;
- un ressort à lame spiralée (68) susceptible de passer de l'état bandé à l'état débandé pour lancer en rotation ledit rotor (16) et dont l'une des extrémités (69) est liée audit boîtier (1) ;
- des moyens de blocage (32) de la rotation dudit rotor (16) ;
- des moyens de commande (39) des moyens de blocage (32) de la rotation dudit rotor (16) ;
- un arbre (56) rotatif disposé coaxialement audit ressort (68) et susceptible d'être déplacé en translation, l'autre extrémité (67) dudit ressort (68) étant liée audit arbre (56) ;
- des moyens d'accouplement (19,59) dudit arbre (56) avec ledit rotor (16) susceptibles de solidariser en rotation ledit arbre et ledit rotor ;
- ledit arbre (56) pouvant occuper axialement une position de repos pour laquelle lesdits moyens d'accouplement (19,59) ne coopèrent pas et ledit ressort (68) est débandé avec ses spires alignées ou une position de travail pour laquelle lesdits moyens d'accouplement (19,59) coopèrent et ledit ressort (68) est bandé et déformé axialement,
caractérisé en ce que ledit arbre (56) est monté coulissant en translation par rapport à des paliers (9,51) prévus pour assurer sa rotation et en ce qu'un moyen de blocage en translation (63) limite, après désaccouplement des moyens d'accouplement (19,59) du rotor (16) et de l'arbre (56), la course de translation dudit arbre (56), empêchant ainsi tout nouveau couplage.

2. Gyroscope selon la revendication 1,
caractérisé en ce que ledit rotor (16) et ledit arbre (56) sont coaxiaux, et en ce que l'un comporte axialement l'un desdits moyens d'accouplement, et que l'autre comporte axialement l'autre desdits moyens d'accouplement.

3. Gyroscope selon l'une des revendications 1 ou 2,
caractérisé en ce que lesdits moyens d'accouplement entre le rotor (16) et l'arbre (56) sont du type vis-écrou.

4. Gyroscope selon l'une des revendications 1 ou 2,
caractérisé en ce que lesdits moyens d'accouplement entre le rotor (16) et l'arbre (56) sont du type à baïonnette.

5. Gyroscope selon la revendication 1,
caractérisé en ce que le moyen de blocage en translation de l'arbre (56) est une bague élastique (63).

6. Gyroscope selon l'une quelconque des revendications précédentes,
caractérisé en ce que le boîtier (1) comporte une partie mobile (75) reliée de façon fixe à une extrémité (69) du ressort (68) et permettant de bander ce dernier.

7. Gyroscope selon l'une quelconque des revendications précédentes,
caractérisé en ce que le rotor (16) comporte, en extrémité (13) de son arbre (15), un moyen d'accouplement en rotation, constitué d'une vis ou d'un trou fileté.

8. Gyroscope selon l'une quelconque des revendications 1 à 6,
caractérisé en ce que le rotor (16) comporte, en extrémité (13) de son arbre (15), un moyen d'accouplement en rotation, constitué de la partie mâle ou de la partie femelle d'un système à baïonnette.

9. Gyroscope selon l'une quelconque des revendications 1 à 6,
caractérisé en ce que le rotor (16) comporte, en extrémité (13) de son arbre (15), un moyen d'accouplement en rotation, constitué d'une fente (18) ou d'une clavette.

## Patentansprüche

1. Kreisel derart, daß er umfaßt:
- ein Gehäuse (1);
- einen im Gehäuse (1) angeordneten Rotor (16);
- eine Spiralblattfeder (68), die vom gespannten in den entspannten Zustand übergehen kann, um die Rotation von Rotor (16) zu bewirken, und deren eines Ende (69) mit dem Gehäuse (1) verbunden ist;
- Mittel (32) zur Blockierung der Rotation des Rotors (16);
- Steuermittel (39) der Mittel (32) zur Rotationsblockierung von Rotor (16);
- eine koaxial zur Feder (68) angeordnete Drehwelle (56), der eine Translationsbewegung aufgegeben werden kann, wobei das andere Ende (67) der Feder (68) mit der Welle (56) verbunden ist;
- Kopplungsmittel (19,59) für Welle (56) und Rotor (16), durch die die Welle und der Rotor bei Rotation verbunden werden;
- Dabei kann die Welle (56) axial eine Ruhestellung, in der die Kopplungsmittel (19,59) unwirksam sind und die Feder (68) mit ihren in Reihe liegenden Windungen entspannt ist, oder eine Arbeitsstellung einnehmen, in der die Kopplungsmittel (19,59) zusammenwirken und die Feder (68) gespannt und axial verformt ist,
dadurch gekennzeichnet, daß die Welle (56) gegenüber Lagern (9,51) zur Gewährleistung der Rotation in einer Translationsbewegung gleitend angeordnet ist, und daß ein Translations-Blockierungsmittel (63) nach der Auskopplung der Kopplungsmittel (19,59) von Rotor (16) und Welle (56) die Translationsbewegung der Welle (56) begrenzt und so jede erneute Kopplung verhindert.

2. Kreisel nach Anspruch 1,
dadurch gekennzeichnet, daß der Rotor (16) und die Welle (56) koaxial sind, und daß ein Bauteil axial eins der Kopplungsmittel, und daß das andere Bauteil axial das andere der Kopplungsmittel umfaßt.

3. Kreisel nach einem der Ansprüche 1 oder 2,
dadurch gekennzeichnet, daß die Kopplungsmittel zwischen dem Rotor (16) und der Welle (56) aus Schraube und Mutter bestehen.

4. Kreisel nach einem der Ansprüche 1 oder 2,
dadurch gekennzeichnet, daß die Kopplungsmittel zwischen dem Rotor (16) und der Welle (56) von der Art einer Bajonettvorrichtung sind.

5. Kreisel nach Anspruch 1,
dadurch gekennzeichnet, daß das Translations-Blockierungsmittel der Welle (56) ein elastischer Ring (63) ist.

6. Kreisel nach einem der obigen Ansprüche,
dadurch gekennzeichnet, daß das Gehäuse (1) einen beweglichen Teil (75) hat, der fest mit einem Ende (69) der Feder (68) verbunden ist und deren Spannung ermöglicht.

7. Kreisel nach einem der obigen Ansprüche,
dadurch gekennzeichnet, daß der Rotor (16) am Ende (13) seiner Welle (15) ein Rotations-Kopplungsmittel hat, das aus einer Schraube oder einer Gewindebohrung besteht.

8. Kreisel nach einem der Ansprüche 1 bis 6,
dadurch gekennzeichnet, daß der Rotor (16) am Ende (13) seiner Welle (15) ein Rotations-Kopplungsmittel hat, bestehend aus dem Steckteil oder dem Aufnahmeteil eines Bajonettsystems.

9. Kreisel nach einem der Ansprüche 1 bis 6,
dadurch gekennzeichnet, daß der Rotor (16) am Ende (13) seiner Welle (15) ein Rotations-Kopplungsmittel hat, bestehend aus einem Schlitz (18) oder einem Keil.

## Claims

1. Gyroscope, of the type comprising:
- a casing (1);
- a rotor (16) located in the said casing (1);
- a spiral-wound leaf spring (68) capable of passing from the tensed state to the released state in order to set the said rotor (16) in rotation, and one of the ends (69) of which is connected to the said casing (1);
- means (32) for blocking the rotation of the said rotor (16);
- means (39) for controlling the means (32) for blocking the rotation of the said rotor (16);
- a rotary shaft (56) located coaxially with the said spring (68) and capable of being moved in terms of translation, the other end (67) of the said spring (68) being connected to the said shaft (56);
- means (19,59) for coupling the said shaft (56) with the said rotor (16), the means being capable of securing the said shaft and the said rotor in terms of rotation;
- it being possible for the said shaft (56) to occupy, axially, a position of rest for which the said coupling means (19,59) do not interact, and the said spring (68) is released with its turns aligned, or a working position for which the said coupling means (19,59) do interact, and the said spring (68) is tensed, and axially deformed, characterized in that the said shaft (56) is mounted so that it can slide in terms of translation with respect to bearings (9,51) designed to ensure that it rotates, and in that a means (63) for blocking in terms of translation, after the means (19,59) for coupling the rotor (16) and the shaft (56) have been uncoupled, limits the translational travel of the said shaft (56), thus preventing any new coupling.

2. Gyroscope according to Claim 1, characterized in that the said rotor (16) and the said shaft (56) are coaxial, and in that one axially includes one of the said coupling means, and that the other axially includes the other of the said coupling means.

3. Gyroscope according to one of Claims 1 or 2, characterized in that the said means for coupling between the rotor (16) and the shaft (56) are of the screw-nut type.

4. Gyroscope according to one of Claims 1 or 2, characterized in that the said means for coupling between the rotor (16) and the shaft (56) are of the bayonet type.

5. Gyroscope according to Claim 1, characterized in that the means for blocking the shaft (56) in terms of translation is an elastic ring (63).

6. Gyroscope according to any one of the preceding claims, characterized in that the casing (1) includes a moving part (75) connected so that it is fixed to one end (69) of the spring (68), and allowing the latter to be tensed.

7. Gyroscope according to any one of the preceding claims, characterized in that the rotor (16) includes, at the end (13) of its shaft (15), a means for coupling in terms of rotation, consisting of a screw or of a threaded hole.

8. Gyroscope according to any one of Claims 1 to 6, characterized in that the rotor (16) includes, at the end (13) of its shaft (15), a means for coupling in terms of rotation, consisting of the male part or the female part of a bayonet system.

9. Gyroscope according to any one of Claims 1 to 6, characterized in that the rotor (16) includes, at the end (13) of its shaft (15), a means for coupling in terms of rotation, consisting of a slot (18) or of a key.
